# EUROPÄISCHE PATENTSCHRIFT

(11) **EP 4 455 504 B1**
(45) Veröffentlichungstag und Bekanntmachung des Hinweises auf die Patenterteilung: **28.01.2026**
(21) Anmeldenummer: 24169628.5
(22) Anmeldetag: 11.04.2024
(51) Int. Cl.: F16D 65/092, F16D 69/02

(54) **BREMSBELAG MIT KORROSIONSGESCHÜTZTER KONTAKTFLÄCHE UND SCHEIBENBREMSE**
BRAKE PAD WITH A CORROSION-PROTECTED CONTACT SURFACE AND DISC BRAKE
GARNITURE DE FREIN AVEC SURFACE DE CONTACT PROTÉGÉE CONTRE LA CORROSION ET FREIN À DISQUE

(30) Priorität: 27.04.2023 DE 202023102292 U
(43) Veröffentlichungstag der Anmeldung: 30.10.2024
(73) Patentinhaber: KNORR-BREMSE Systeme für Nutzfahrzeuge GmbH, 80809 München (DE)
(72) Erfinder: Pahle, Wolfgang, 81245 München (DE); Tropp, Martin, 84364 Bad Birnbach (DE); Podolak, Simon, 80687 München (DE)

(56) Entgegenhaltungen:
- DE-A1- 102019 210 088
- DE-A1- 3 637 716
- DE-A1- 4 138 933
- DE-B2- 2 616 720
- US-A1- 2015 096 851
- US-B2- 8 956 469

## Beschreibung

Die vorliegende Erfindung betrifft einen Bremsbelag mit einer korrosionsgeschützten Kontaktfläche und einer Scheibenbremse.

In der Vergangenheit wurden verschiedene Beschichtungen auf eine Bremsbelagträgerplatte zur Verbesserung der Anhaftung des Reibmaterials oder zum Korrosionsschutz eingesetzt.

Problematisch ist u.a. die Auftragsdicke und die Anhaftung der Beschichtung auf der Oberfläche der Bremsbelagträgerplatte. Einige der Beschichtungen hatten z.B. nicht die hinreichende Tiefe und wurden bei Reibung und Kratzern unterwandert. Stärkere Dicken der Beschichtungen beeinflussen die Maßhaltigkeit der Bremsbelagträgerplatte.

Wiederum andere Beschichtungen, z.B. Hartkeramikbeschichtungen, hatten keine hinreichende Festigkeit und platzten bei Kontakt mit dem Bremsträger bei deren Führung im Bremsbelagschacht ab.

Die DE 41 38 933 A1 offenbart eine Trägerplatte zur Aufnahme eines Reibbelags mit einer Oberfläche aus mikrolegiertem Stahl auf die verschiedene Metallschichten, u.a. Zink, aufgebracht werden können. Als Grund für die Mikrolegierung wird Folgendes genannt:
Die Eigenschaften einer Trägerplatte aus Normalstahl St 52 fallen nach dem Aufbringen des Rauhgrundes ab. Wird dagegen mikro-legierter Stahl verwendet, dann verändert sich der Stahl nach dem Aufbringen des Rauhgrundes, jedoch letztlich verbleiben den Trägerplatten Eigenschaften, als wenn diese aus Normalstahl St 52 hergestellt sind. Mikrolegierter Stahl hat noch die Eigenschaft, daß durch das partielle Härten an den betreffenden Stellen, wie z. B. in den Endbereichen der Trägerplatten ein Gefüge erhalten wird, das die mechanisch/dynamischen Eigenschaften heraufsetzt, d. h. die Werte des üblich eingesetzten Stahles St 52 werden heraufgesetzt.

Die vorliegende Erfindung setzt bei der Aufgabe an eine Beschichtung der Korrosionsflächen mit verbesserter Anhaftung bei entsprechend hohem Korrosionsschutz auch in mechanisch stark belasteten Bereichen zu schaffen.

Die vorliegende Erfindung löst diese Aufgabe durch einen Bremsbelag mit den Merkmalen des Anspruchs 1.

Ein erfindungsgemäßer Bremsbelag verfügt über eine Bremsbelagträgerplatte und einen Reibbelag.

Die Bremsbelagträgerplatte weist einen Metallgrundkörper auf. Dieser Metallgrundkörper weist zumindest zwei gegenüberliegende zu einem Bremsträger gerichtete Kontaktflächen auf. Insbesondere können die Kontaktflächen zu einer Schachtwand eines Bremsbelagschachts gerichtet sein, in welchem der oder die Bremsbeläge, z.B. während des Verfahrens beim Zuspannen, geführt sind.

Zumindest die Kontaktflächen der Bremsbelagträgerplatte weist eine Sheradisierungsschicht auf. Bei der Sheradisierung erfolgt ein Verdampfen und Abscheiden von Zink auf der Oberfläche des Metallgrundkörpers und diffundiert zu einem gewissen Grad in den Metallgrundkörper ein. Es kommt zur Ausbildung einer Eisen-Zink-Legierungsschicht. Dabei wird der Metallgrundkörper gemeinsam mit dem Zink in einer Trommel erhitzt.

Insgesamt ermöglicht die Sheradisierungsschicht die Schaffung eienr Zink-Eisen-Legierungsschicht mit großer Diffusionstiefe bei höherer mechanischer Festigkeit als eine reine Zinkschicht.

Zugleich weist die Sheradisierungsschicht einer hervorragenden Duktilität auf, so dass Verformungen des Metallgrundkörpers auch durch die Sharadiserungsschicht miterfolgen und es nicht zu hohen Materialspannungen oder Abplatzen der Schicht kommen

Die Sheradisierungsschicht weist dabei eine hohe Schichtdicke ohne viel Materialauftrag auf, da die Dampfdiffusion in die Oberfläche des Metallgrundkörpers hinein erfolgt.

Die Sheradisierung kann als Opferschicht gegen Tiefenkorrosion wirken.

Sie ist insbesondere verformbar und mechanisch stabil durch den Eisenanteil in der Schicht und daher besonders vorteilhaft in der vorgenannten Anwendung im vergleich zu anderen Schichten, z.B. einer Galvanikschicht. Zugleich bildet die Sheradisierungsschicht durch den Zinanteil einen sehr effektiven Korrosionsschutz aus.

Vorteilhafte Ausgestaltungen des erfindungsgemäßen Bremsbelags sind Gegenstand der Unteransprüche.

Es ist von Vorteil, wenn die Scheradisierungsschicht als ein Fe-Zn-Legierungsmaterial ausgebildet ist, wobei die Konzentration an Zink in der Sheradisierungsschicht ausgehend von einer Vorderseite der Bremsbelagträgerplatte in Richtung der Rückseite der Bremsbelagträgerplatte hin abnimmt.

Es ist weiterhin von Vorteil, insbesondere für die mechanische Stabilität der Sheradisierungsschicht, wenn die Eisenkonzentration der Sheradisierungsschicht an der Vorderseite zumindest 5 Gew.% beträgt.

Gegen ein Ablösen oder einen schnellen Abrieb bei mechanischer Belastung ist es von Vorteil, wenn die Sheradisierungsschicht eine Diffusionstiefe von mehr als 2 µm, vorzugsweise mehr als 4 µm, aufweist, besonders bevorzugt mehr als 10 µm, aufweist, wobei die Shearadisierungsschicht in dieser Tiefe eine Zinkkonzentration von zumindest 1 Gew.%, vorzugsweise 5 Gew.%, aufweist. Aufgrund der vergleichsweise hohen Diffusionstiefe ist eine starke Verankerung der Schicht zu beobachten. Die Diffusionstiefe setzt an, wenn sich die Konzentration der Legioerungskomponenten in die Tiefe des Metallgrundkörpers ändert, so dass sich ein Konzentrationsgradient ergibt. Selbstverständlich kann auch der metallische Grundkörper einen Grundgehalt an Zink aufweisen, allerdings ist dann die Konzentration der Legierung im weiteren Verlaufg in die Tiefe des Werkstücks vergleichsweise konstant.

Der Metall-Grundkörper besteht vorzugsweise aus einem Gussmaterial und kann insbesondere als ein Eisen- oder Stahlgussteil ausgebildet sein.

Vorteilhaft kann zur Verbesserung der Anhaftung des Reibmaterials auf dem Metallkörper eine Sheradisierungsschicht zwischen dem Metallgrundkörper und dem Reibbelag angeordnet sein. Dies kann die gleiche Sheradisierungsschicht wie in den Kontaktflächen sein oder eine räumlich-getrennte weitere Sheradisierungsschicht. Die räumliche Trennung kann z.B. durch eine Oberflächenabdeckung, wie z.B. eine Maskierung durch eine Folie, eine Maskierungsmasse, ein Abdeckkörper, eine Abdeckmaske oder dergleichen erfolgen.

Entsprechend kann die Bremsbelagträgerplatte, insbesondere entlang der Vorder- und/oder Rückseite, beschichtungsfreie Bereiche aufweisen. In manchen Bereichen wird die Sheardisierungsschicht nicht benötigt und kann ggf. sogar negativ sein. Beispielsweise kann die Schicht die Temperaturmessung der Bremsbelagträgerplatte bei der Ermittlung der Bremstemperatur behindern.

Für einen allseitigen Korrosionsschutz ist es alternativ zur vorgenannten Variante allerdings von Vorteil, wenn der Bremsbelag allseitig mit der Sheradisierungsschicht versehen ist.

Weiterhin erfindungsgemäß ist eine Scheibenbremse, insbesondere eines Nutzfahrzeugs. Der Aufbau einer Scheibenbremse ist dem Fachmann an sich bekannt. Es wird diesbezüglich auch auf die WO 2017/076727 A1 verwiesen. Die Scheibenbremse umfasst in an sich bekannter Weise einen Bremsträger mit einem Bremsbelagsschacht. In dem Bremsbelagsschacht sind einer oder mehrere erfindungsgemäße Bremsbeläge angeordnet. Die entsprechend beschichteten Kontaktflächen sind die Flächen mit welcher der Bremsbelag randseitig die Schachtwandungen berührt.

Vorteilhaft zur Ausbildung eines Bremsbelags in Leichtbauweise können die den Schachtwandungen des Bremsbelagschachtes des Bremsträgers zugewandte Kantenflächen, welche zugleich die Kontaktflächen sind, als Teil einer randseitigen Materialverdickung ausgebildet sein.

Die Erfindung wird anhand der nachfolgenden Figuren anhand eines Ausführungsbeispiels näher erläutert. Die einzelnen Details des Ausführungsbeispiels sind in keinster Weise als beschränkend für den Gegenstand der vorliegenden Erfindung anzusehen. Vielmehr ergeben sich aus dem Ausführungsbeispiel für den Fachmann zahlreiche weitere Abwandlungsvarianten, die ebenfalls Teil der vorliegenden Erfindung sind. Es zeigt:
Fig. 1 Perspektivansicht auf einen erfindungsgemäßen Bremsbelag; und
Fig. 2 geschnittene Perspektivansicht des Bremsbelags.

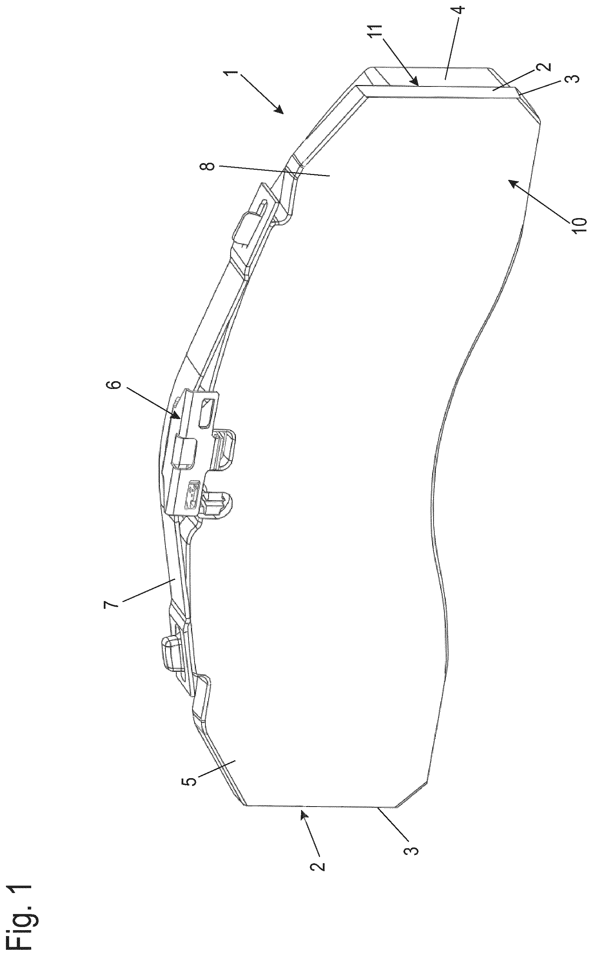

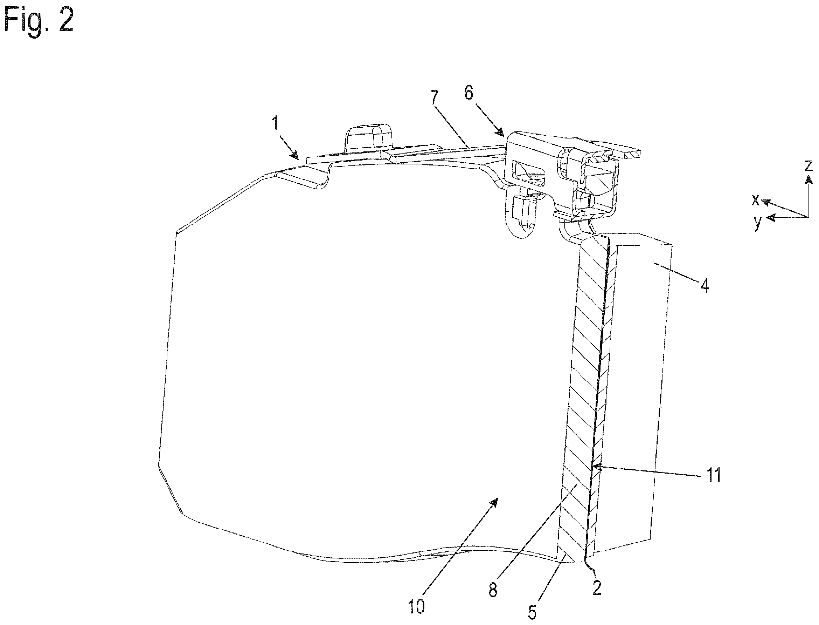

Eine Ausführungsvariante eines erfindungsgemäßen Bremsbelags 1 ist in Fig. 1 und 2 dargestellt.

Der Bremsbelag 1 weist einen Bremsbelagträgerplatte 5 und einen Reibbelag 4 zum Kontakt mit der rotierenden Bremsscheibe einer Scheibenbremse auf. Die Belagträgerplatte 5 weist einen Metallgrundkörper 8 auf. Der Metallkörper 8 weist kontaktflächen 3 zum Kontakt mit der Belagschachtwandung eines Bremsträgers einer Scheibenbremse während des Zuspannens auf.

Üblicherweise weist eine Scheibenbremse einen Bremsträger mit einem Bremsbelagsschacht zur Aufnahme und Führung der Bremsbeläge auf. Entsprechende Details zur Konstruktion einer Scheibenbremse können der WO 2017/076727 A1 entnommen werden. Die Sicherungsvorrichtung 6 dient der Sicherung der Position eines Belaghaltebügels und bildet eine lösbare Verbindung zwischen dem Belaghaltebügel und der Bremsbelagträgerplatte 5 des Bremsbelags.

Die Bremsbelagträgerplatte der Fig. 1 und 2 weist eine Sicherungsvorrichtung 6 auf, welche allerdings für den Gegenstand der vorliegenden Erfindung nur von geringer Relevanz sind.

Die Bremsbelagträgerplatte 5 kann verschiedene alternative Formen aufweisen. Sie kann insbesondere ein Leichtbaudesign aufweisen, in welchem einzelne Bereiche dicker ausgebildet sind als andere Bereiche. Dies ist z.B. in der DE 20 2009 017 931 realisiert, in welcher ein Randbereich eine geringere oder größere Plattendicke aufweist als der Mittelbereich. Eine Materialwulst im Randbereich ist u.a. auch in Fig. 14 der DE 38 03 069 A1 dargestellt. Beide Varianten von Bremsbelagträgerplatten können anstelle der Bremsbelagträgerplatte 5 in der vorliegenden Erfindung eingesetzt werden.

Die Bremsbelagträgerplatte 5 kann über eine Belaghaltefeder 7 aufweisen mit welcher der Bremsbelag im Bremsschacht gehalten wird. Selbstverständlich ist auch eine andere Haltevorrichtung zur Halterung der Bremse in einem Bremsträger möglich.

Die Bremsbelagträgerplatte 5 weist eine Vorderseite 11 mit einem Kontaktbereich mit dem Reibbelag 4 auf. Die Bremsbelagträgerplatte weist überdies einen Rückseite 11 auf, an welcher eine Bremskraft auf die Bremsbelagträgerplatte, z.B. über einen Bremsstempel, übertragen wird.

Die Besonderheit der vorliegenden Erfindung ist die zumindest bereichsweise Anordnung einer Sheradisierungsschicht 2 auf der Oberfläche der Bremsbelagträgerplatte 4.

Beim Sheradisieren diffundiert Zink in die Bauteiloberfläche ein und es bildet sich eine chemische Verbindung des Eisens mit dem Zink zu ZnFe Legierungsschicht. Hierdurch wird eine stoffschlüssige Verbindung erzeugt, die den rauen Bedingungen im Nutzfahrzeug-Betrieb einer Scheibenbremse besser standhält als andere Korrosionsschutzverfahren, bei denen sich die Schutzschicht nur oberflächlich auf dem Bauteil ablagert und maximal eine mechanische Verklammerung mit der Oberfläche eingeht.

Sherardisierte Schichten sind aufgrund des Eisengehaltes edler als reine z.B. galvanisch-abgeschiedene Zinkschichten, dies hat einen positiven Einfluss auf die Korrosionsrate und die Korrosionsprodukte.

Ein weiterer Vorteil dieser ZnFe-Sheradisierungschicht ist, dass sie umformbar ist. Bremsbeläge werden in dem mit der Achse fest verbundenen Bremsträger mit Spiel geführt, sodass sie beweglich sind und sich nach dem Bremsvorgang durch Vibrationen wieder von den Reibflächen der Bremse lösen. Im nichtgebremsten Zustand schlagen die Bremsbeläge 1, insbesondere die als Kontaktflächen 3 ausgebildeten Kantenflächen dadurch aber durch Querbeschleunigungen gegen die Kontaktflächen des Bremsträgers. Bei sehr harten spröden Beschichtungen kann dies zu Abplatzungen oder einem Abrieb der Beschichtung führen. Durch die Umformbarkeit der ZnFe-Schicht ist dieser Effekt deutlich gemindert.

Daher ist es von Vorteil, wenn die zum Bremsschacht gerichteten Kontaktflächen 3 ebenfalls die Sheradisierungsschicht aufweisen.

Die Sheradisierungsschicht 2 kann eine Diffusionstiefe von mehr als 2 µm, vorzugsweise mehr als 4 µm, aufweist, besonders bevorzugt mehr als 10 µm, aufweist wobei die Shearadisierungsschicht in dieser Tiefe eine Zinkkonzentration von zumindest 1 Gew.%, vorzugsweise 5 Gew.%, aufweisen.

Die Analyse der Diffusionstiefe und derZusammensetzung in der jeweiligen Diffusionstiefe kann über GEODS (Glimmentladungsspektroskopie mit Sputtergas Ar 5.0; Anodendurchmesser 2,5 mm) und/oder über eine REM-Messung kombiniert mit einer EDX-Messung als Rasterelektronenmikroskopie in Kombination mit einer energiedisperden Röntgenemissionsspektroskopie (EDX,mit einer Energieauflösung von 10 eV/ch und einer Zählrate von 14000 Impulse pro Sekunde erfolgen. Das REM kann ein REM-DSM 962 mit einer Beschleunigungsspannung von 20 kV und etwa 500-facher Vergrößerung und einem Arbeitsabstand von 25 mm erfolgen.

Weiterhin ist eine metallisch gebundene Zinkschicht eine Opferschicht als aktive kathodische Korrosionsschutzschicht ausgebildet. Im Fall von Korrosion opfert sich die Zinkschicht für die zu schützende Rückenplatte aus Gusseisen oder Walzstahl oder Stahlwollen der Reibmasse und bildet ein weiches weißes Zinkoxid das nicht zum Festrosten der Rückenplatten im Belagschacht führt. Dadurch wird zusätzlich ein Unterrosten der Reibmasse deutlich reduziert oder verzögert.

Weiterhin ist die sheradisierte Beschichtung bzw. die Sheradisierungsschicht ein sehr guter Haftgrund für Klebeverbindungen wie sie bei Bremsbelägen zwischen Rückenplatten und Reibmasse zum Einsatz kommen. Daher eignet sich die Sheradisierung in diesem Bereich besonders bevorzugt.

Bei Gussrückenplatten ist man bestrebt durch Leichtbaudesigns möglichst nur an den kraftübertragenden Bereichen die volle Dicke der Platte darzustellen. Diese Dickenunterschiede und das grundsätzliche ungleichmäßige Abkühlverhalten von Gussteilen können zu verbleibenden Eigenspannungen im Bauteil führen. Damit das Lüftspiel, das heißt der Luftspalt zwischen Bremsbelag und Bremsscheibe im ungebremsten Zustand immer in einem definierten Bereich bleibt, ist es wichtig, dass die Bremsbelagträgerplatten eine definierte Ebenheit aufweisen. Ansonsten würde sich die Rückenplatte wie ein Federelement verhalten und der Nachsteller in der Bremse könnte ein falsches Lüftspiel einstellen. Sind in den Bremsbelagträgerplatten noch Restspannungen, können diese sobald sie frei werden zu Verformungen derselben führen. Darum sind Verfahren bei denen hohe Temperaturen auftreten und einen Einfluss auf die Gefügeausbildung haben ungeeignet. Sheradisieren wird üblicherweise zwischen 350-500°C durchgeführt. Bei den hier verwendeten Gussrückenplatten aus GJS 400 kann die Prozesstemperatur unterhalb 400°C bleiben.

Sheradisieren ist an sich bekannt. Es ist ein Trommelprozess, bei dem sich die zu beschichtenden Bauteile mit Zinkpulver und einem Füllstoff in einer Trommel bewegen. Dabei verdampft das Zink und wird auf der Oberfläche des Bauteils abgeschieden. Bei den Bremsbelagträgerplatten müssen nur die Kontaktflächen zum Bremsträger korrosionsgeschützt sein. Entsprechend können einige Seiten der Bremsbelagträgerplatte maskiert werden.

Ein Maskieren kann z.B. dadurch erfolgen können die Rückenplatten auch aufeinander gestapelt in den Prozess eingebracht werden, sodass die umlaufenden Außenflächen frei liegen und entsprechend mit dem Zink reagieren. Bei dieser Art der Produktion muss sich die Trommel nicht drehen.

Es werden somit auch nicht alle Flächen der Bremsbelagträgerplatten beschichtet, wodurch weniger Zinkpulver benötigt wird, oder der Prozess in einer kürzeren Prozesszeit die erforderliche Schichtstärke aufbaut.

Aufgrund der vorgenannten Erläuterung ist es verständlich, dass auch der Bremsträger, insbesondere die Schachtwandungen zur Führung der Bremsbeläge, eine entsprechende Sheradisierungsschicht, alternativ oder zusätzlich zur Sheradisierungsschicht der Bremsbeläge aufweisen können.

Zur konstruktiven Ausgestaltung eines geeigneten Bremsträgers wird abermals auf die WO 2017/076727 A1 verwiesen.

### BEZUGSZEICHEN

- 1: Bremsbelag
- 2: Sheradisierungsschicht
- 3: Kontaktfläche
- 4: Reibbelag
- 5: Bremsbelagträgerplatte
- 6: Sicherungsvorrichtung
- 7: Belaghaltefeder
- 8: Metallgrundkörper

- 10: Rückseite
- 11: Vorderseite

## Patentansprüche

1. Bremsbelag (1) mit einer Bremsbelagträgerplatte (5) mit einem Metallgrundkörper (8) und einem Reibbelag (4), wobei der Metallgrundkörper (8) zumindest zwei gegenüberliegende zu einem Bremsträger gerichtete Kontaktflächen (3) aufweist, **dadurch gekennzeichnet, dass** zumindest die Kontaktflächen (3) eine Sheradisierungsschicht (2) als Korrosionsschutz aufweisen.

2. Bremsbelag nach Anspruch 1, **dadurch gekennzeichnet, dass** die Sheradisierungsschicht (2) als ein Fe-Zn-Legierungsmaterial ausgebildet ist, wobei die Konzentration an Zink in der Sheradisierungsschicht (2) ausgehend von einer Vorderseite (11) der Bremsbelagträgerplatte (5) in Richtung der Rückseite (10) der Bremsbelagträgerplatte (5) hin abnimmt.

3. Bremsbelag nach Anspruch 2, **dadurch gekennzeichnet, dass** die Eisenkonzentration der Sheradisierungsschicht (2) an der Vorderseite (11) zumindest 5 Gew.% beträgt.

4. Bremsbelag nach einem der vorhergehenden Ansprüche, **dadurch gekennzeichnet, dass** die Sheradisierungsschicht (2) eine Diffusionstiefe von mehr als 2 µm, vorzugsweise mehr als 4 µm, aufweist, besonders bevorzugt mehr als 10 µm, aufweist, wobei die Shearadisierungsschicht (2) in dieser Tiefe eine Zinkkonzentration von zumindest 1 Gew.%, vorzugsweise 5 Gew.%, aufweist.

5. Bremsbelag nach einem der vorhergehenden Ansprüche, **dadurch gekennzeichnet, dass** der Metall-Grundkörper (8) aus einem Gussmaterial besteht.

6. Bremsbelag nach einem der vorhergehenden Ansprüche, **dadurch gekennzeichnet, dass** eine Sheradisierungsschicht (2) zwischen dem Metallgrundkörper (8) und dem Reibbelag (4) angeordnet ist.

7. Bremsbelag nach einem der vorhergehenden Ansprüche, **dadurch gekennzeichnet, dass** die Bremsbelagträgerplatte (5), insbesondere entlang der Vorder- und/oder Rückseite (10, 11), beschichtungsfreie Bereiche aufweist.

8. Bremsbelag nach einem der vorhergehenden Ansprüche 1-6, **dadurch gekennzeichnet, dass** der Bremsbelag (1) allseitig mit der Sheradisierungsschicht (2) versehen ist.

9. Bremsträger einer Scheibenbremse mit einem Bremsbelagschacht zur Aufnahme von Bremsbelägen (1), **dadurch gekennzeichnet, dass** die Schachtwandungen eine Sheradisierungsschicht aufweisen.

10. Scheibenbremse, insbesondere eines Nutzfahrzeugs, umfassend einen Bremsträger mit einem Bremsbelagsschacht und einen oder mehrere darin angeordnete Bremsbeläge (1) nach einem der vorhergehenden Ansprüche.

11. Scheibenbremse nach Anspruch 10, **dadurch gekennzeichnet, dass** die den Schachtwandungen des Bremsbelagschachtes des Bremsträgers zugewandte Kontaktflächen (7) der Bremsbelagträgerplatte (5) als Kantenflächen einer randseitigen Materialverdickung ausgebildet sind.

## Claims

1. Brake pad (1) having a brake pad carrier plate (5) with a metal base body (8) and a friction lining (4), wherein the metal base body (8) has at least two opposite contact surfaces (3) facing a brake carrier, **characterized in that** at least the contact surfaces (3) have a sheradization layer (2) as corrosion protection.

2. Brake pad according to claim 1, **characterized in that** the sheradization layer (2) is in the form of an Fe-Zn alloy material, wherein the concentration of zinc in the sheradization layer (2) decreases from a front side (11) of the brake pad carrier plate (5) towards the rear side (10) of the brake pad carrier plate (5).

3. Brake pad according to claim 2, **characterized in that** the iron concentration of the sheradization layer (2) on the front side (11) is at least 5 wt.%.

4. Brake pad according to any one of the preceding claims, **characterized in that** the sheradization layer (2) has a diffusion depth of more than 2 µm, preferably more than 4 µm, most preferably more than 10 µm, wherein the sheradization layer (2) has a zinc concentration of at least 1 wt.%, preferably 5 wt.%, at this depth.

5. Brake pad according to any one of the preceding claims, **characterized in that** the metal base body (8) consists of a cast material.

6. Brake pad according to any one of the preceding claims, **characterized in that** a sheradization layer (2) is arranged between the metal base body (8) and the friction lining (4).

7. Brake pad according to any one of the preceding claims, **characterized in that** the brake pad carrier plate (5) has coating-free areas, in particular along the front and/or rear side (10, 11).

8. Brake pad according to any one of the preceding claims 1-6, **characterized in that** the brake pad (1) is provided with the sheradization layer (2) on all sides.

9. Brake carrier of a disc brake having a brake pad shaft for receiving brake pads (1), **characterized in that** the shaft walls have a sheradization layer.

10. Disc brake, in particular for a utility vehicle, comprising a brake carrier with a brake pad shaft and one or more brake pads (1) arranged therein according to any one of the preceding claims.

11. Disc brake according to claim 10, **characterized in that** the contact surfaces (7) of the brake pad carrier plate (5) facing the shaft walls of the brake pad shaft of the brake carrier are configured as edge surfaces of an edge-side material thickening.

## Revendications

1. Garniture de frein (1) avec une plaque de support de garniture de frein (5) avec un corps de base métallique (8) et une garniture de friction (4), dans laquelle le corps de base métallique (8) présente au moins deux surfaces de contact (3) opposées orientées vers un support de frein, **caractérisée en ce qu'**au moins les surfaces de contact (3) présentent une couche de shérardisation (2) en tant que protection anticorrosion.

2. Garniture de frein selon la revendication 1, **caractérisée en ce que** la couche de shérardisation (2) est constituée d'un alliage Fe-Zn, dans laquelle la concentration en zinc dans la couche de shérardisation (2) diminue à partir d'un côté avant (11) de la plaque de support de garniture de frein (5) en direction du côté arrière (10) de la plaque support de garniture de frein (5).

3. Garniture de frein selon la revendication 2, **caractérisée en ce que** la concentration en fer de la couche de shérardisation (2) sur le côté avant (11) est d'au moins 5 % en poids.

4. Garniture de frein selon l'une quelconque des revendications précédentes, **caractérisée en ce que** la couche de shérardisation (2) présente une profondeur de diffusion supérieure à 2 µm, de préférence supérieure à 4 µm, le plus préférentiellement supérieure à 10 µm, dans laquelle la couche de shérardisation (2) présente à cette profondeur une concentration en zinc d'au moins 1 % en poids, de préférence de 5 % en poids.

5. Garniture de frein selon l'une quelconque des revendications précédentes, **caractérisée en ce que** le corps de base métallique (8) est constitué d'un matériau moulé.

6. Garniture de frein selon l'une quelconque des revendications précédentes, **caractérisée en ce qu'**une couche de shérardisation (2) est disposée entre le corps de base métallique (8) et la garniture de friction (4).

7. Garniture de frein selon l'une quelconque des revendications précédentes, **caractérisée en ce que** la plaque de support de garniture de frein (5) présente des zones sans revêtement, en particulier le long du côté avant et/ou arrière (10, 11).

8. Garniture de frein selon l'une quelconque des revendications précédentes 1-6, **caractérisée en ce que** la garniture de frein (1) est dotée de la couche de shérardisation (2) de tous les côtés.

9. Support de frein d'un frein à disque avec un logement de garniture de frein pour loger des garnitures de frein (1), **caractérisé en ce que** les parois de logement présentent une couche de shérardisation.

10. Frein à disque, en particulier d'un véhicule utilitaire, comprenant un support de frein avec un logement de garniture de frein et une ou plusieurs garnitures de frein (1) disposées en son sein selon l'une quelconque des revendications précédentes.

11. Frein à disque selon la revendication 10, **caractérisé en ce que** les surfaces de contact (7) de la plaque de support de garniture de frein (5) tournées vers les parois du logement de garniture de frein du support de frein sont conçues en tant que surfaces de bord d'un épaississement de matériau côté bord.
